# EUROPÄISCHE PATENTANMELDUNG

(11) **EP 1 426 849 A1**
(43) Veröffentlichungstag der Anmeldung: **09.06.2004**
(21) Anmeldenummer: 03027241.3
(22) Anmeldetag: 28.11.2003
(51) Int. Cl.: G06F 1/00

(54) **Verfahren zur Programmierung von Flash-E-PROMs in einer mit einem Mikroprozessor ausgerüsteten Steuerelektronik für Strassenfahrzeuge**

(30) Priorität: 05.12.2002 DE 10256799
(71) Anmelder: WABCO GmbH & CO. OHG, 30453 Hannover (DE)
(72) Erfinder: Hawig, Heinrich, 30419 Hannover (DE); Ulken, Ulfert, 30826 Garbsen (DE)
(74) Vertreter: Schrödter, Manfred

(57) **Zusammenfassung**

Es wird ein Verfahren zum sicheren Programmieren von einem elektronisch lösch- und beschreibbaren Speicher in einem Steuergerät vorgeschlagen.

Für das Verfahren wird ein Programmierdatensatz benutzt, der in das Steuergerät eingelesen und von diesem ausgewertet wird. Der Programmierdatensatz enthält neben dem zu programmierenden Speicherabbild eine Geräte-Beschreibung der für die Programmierung zugelassenen Steuergeräte, so daß das Steuergerät eine Identitäts-Prüfung durchführen kann, ob es selbst zum Bereich der zugelassenen Steuergeräte gehört. Ergibt die Identitätsprüfung, daß es zur Programmierung zugelassen ist, so wird die Neuprogrammierung unter Nutzung einer im Steuergerät selbst vorgesehenen Programmiereinrichtung durchgeführt.

## Beschreibung

Die Erfindung betrifft ein Programmierverfahren für einen elektronisch lösch- und beschreibbaren Speicher in einem elektronischen Steuergerät, insbesondere für den Einsatz in Straßenfahrzeugen.

In Straßenfahrzeugen mit elektronisch gesteuerten oder geregelten Einrichtungen, z. B. elektronischer Antiblockier-Bremsregelung, ist es üblich, die Mikroprozessoren in den elektronischen Steuereinrichtungen als Masken-programmierte Mikroprozessoren auszubilden.

Seit dem Erscheinen von 1-Chip-Mikroprozessoren, die über ein integriertes Flash-E-PROM verfügen, ist es auch möglich geworden, diesen Flash-E-PROM-Bereich auch als Programmspeicher für den Mikroprozessor zu benutzen, was zunächst vorwiegend zur Prototypenentwicklung verwendet wurde. Neben solchen Prototypen ist es auch bei Serien üblich geworden, den Flash-E-PROM-Speicher als Programm- und Datenspeicher für den Mikroprozessor zu verwenden.

Zur Zeit der Einreichung dieser Patentanmeldung werden sowohl Masken-programmierte wie Flash-E-PROM-programmierte Mikroprozessoren für jeweils ein bestimmtes Steuergerät vorgesehen, wobei diesem Steuergerät dann der letztgültige Software-Stand zugrundegelegt ist.

Allerdings werden Software-Steuerprogramme üblicherweise kontinuierlich weiterentwickelt, und der in diesem Rahmen entwickelte nächsthöhere (jüngere) Software-Stand wird dann in der nächsten Serie verwendet, d. h. dieser neue Software-Stand ist dann in den Programmspeichern dieser nächsten Seriengeräte enthalten.

Diese an Serien orientierte Verfahrensweise hat zur Folge, daß neu entwickelte Software-Stände nicht in Steuergeräte älterer Serien übernommen werden, seien dies Masken-programmierte oder Flash-E-PROM-programmierte Ausführungsformen.

Dagegen ist es in der Softwaretechnik, vor allem bei kommerziellen Programmen der allgemeinen Datenverarbeitung, seit langem üblich, bestehende Programme zu "updaten", d. h. sie in z. B. einem PC mit einer neuen, aktualisierten Programmversion zu überschreiben, die dann lauffähig ist.

Ein derartiges einfaches Überschreiben eines alten Speicherzustandes durch einen neuen, aktualisierten Speicherzustand ist bei in Straßenfahrzeugen verwendeten Steuereinrichtungen ohne weitere Maßnahmen aus Sicherheitsgründen nicht möglich: Ein bestimmtes Programm darf nur in ein ganz bestimmtes, zu diesem Programm passendes Steuergerät geladen werden, was als solches anhand des neu-aktualisierten Speicherzustandes nicht zu erkennen ist - z. B. würde ein ABS-Bremsregelprogramm in einem Getriebe-Steuergerät erstens natürlich nicht funktionieren und könnte zweitens dort unter Umständen sogar fehlerhafte, das Fahrzeug gefährdende Vorgänge auslösen.

Neben der erforderlichen passenden Zuordnung von Steuergerät und Steuerprogramm in grundsätzlicher Art und Weise darf aber auch ein z. B. altes ABS-Regelprogramm, welches für einen bestimmten Fahrzeugtyp entwickelt wurde, nicht einfach durch ein neu entwickeltes, aktuelles ABS-Regelprogramm überschrieben werden, das nicht für diesen Fahrzeugtyp freigegeben ist.

Mit neueren Generationen von Mikroprozessoren ist der Einsatz der Flash-E-PROM-Technik z. B. bei 1-Chip-Mikroprozessoren kontinuierlich kostengünstiger geworden, und zudem sind nun zunehmend größere Flash-E-PROM-Speicher verfügbar.

Angeregt durch diese Entwicklung besteht ein immer größeres Interesse der Fahrzeughersteller, ein von einem Steuerungshersteller bezogenes Gerät auch mit einer neuen Programmversion nachrüsten zu können.

Aus der EP 0 836 739 B1 ist ein Verfahren zum Aktualisieren eines elektronischen löschbaren Speichers (Flash-EPROM-Speicher, (dort (4)) eines elektronischen Gerätes (dort (5)) über einen mit dem elektronischen Gerät verbundenen Personal Computer (dort (1)) bekannt. Im Speicherbereich (dort (2)) des Personal Computers ist unter anderem der Neuprogrammierungs-Code (dort (3)) für den Flash-EPROM-Speicher geladen; weiter ist dort ein Speicher mit wählbarem Zugriff (dort RAM-Speicher (6)) vorgesehen, in dem ein Ablauf-Programm gespeichert ist. Nach einer Kommunikationsaufnahme zwischen dem Personal Computer und dem elektrischen Gerät wird das Ablauf-Programm in einem im elektronischen Gerät vorgesehenen Speicher mit wahlfreiem Zugriff (dort RAM-Speicher (7)) geladen und nach Prüfung der ordnungsgemäßen Übertragung dort aktiviert. Unter Nutzung des aktivierten Ablauf-Programms wird der Neuprogrammierungs-Code in den Flash-EPROM-Speicher des elektronischen Gerätes geladen und der Aktualisierungsvorgang wird durch einen RESET des Personal Computers abgeschlossen. In dieser Schrift sind keine Prüfungsmaßnahmen zur Identifizierung des elektronischen Gerätes vorgesehen.

Zur Programmierung kann auch ein Diagnosegerät verwendet werden; derartige elektronische Diagnosegeräte werden in Kfz-Werkstätten für viele Arten von elektrisch/elektronischen Wartungsarbeiten benutzt. Hierzu wird das Anschlußkabel des Diagnosegeräts am Fahrzeug auf einen dort angebrachten Diagnosestecker gesteckt, und dann kann das Diagnosegerät nach dem Client/Server-Prinzip mit einem im Fahrzeug untergebrachten elektronischen Steuergerät kommunizieren, wobei das Diagnosegerät den Client und das Steuergerät den Server darstellt und die Kommunikation zwischen beiden nach einem festgelegten Diagnoseprotokoll, z. B. dem KWP2000-Protokoll (Keyword-Protokoll 2000 nach ISO 14230), durchgeführt wird.

Ein solches übliches Diagnosegerät bietet auch die Möglichkeit, Daten oder Programme in ein Steuergerät mit Hilfe eines Download-Prozesses zu übertragen, so daß unter Verwendung des Diagnosegerätes die Neuprogrammierung eines mit einem Flash-E-PROM ausgerüsteten Steuergerätes grundsätzlich möglich ist.

Hierzu findet beispielsweise zwischen dem Diagnosegerät und dem Steuergerät ein Dialog statt, in dem z. B. ein auf einer Zufallszahl basierender Schlüsselcode vom Diagnosegerät erzeugt und von beiden Geräten auf logische Konsistenz überprüft wird. Bei Übereinstimmung der logischen Konsistenz wird der Download-Prozeß (d. h. das Übertragen in das Steuergerät und das Programmieren des Flash-E-PROMs) vom Diagnosegerät eröffnet und in einem weiteren Dialog mit dem Steuergerät abgewickelt.

Bei diesem Verfahren wird die Zugangsberechtigung für das Downloaden im Rahmen des erläuterten Schlüsselcode-Dialogs durchgeführt. Bei diesem Dialog wird aber lediglich geprüft, ob Diagnosegerät und Steuergerät in ihrer logischen Struktur zusammenpassen, so wie dies der Fahrzeughersteller im Diagnosegerät für die Steuergeräte in "seinen" Fahrzeugen vorgesehen hat.

Der nachfolgende Download-Prozeß erfolgt dann z. B. mit dem unten erläuterten "speicherabbild.hex" (1), das keine Information über das Steuergerät selbst enthält.

Das "Downloaden" eines neuen Programms nach dem oben beschriebenen Verfahren deckt eine auf den Inhalt des Neuprogrammierungs-Code bezogene Eignungsprüfung des Steuergerätes für das neue Programm in keiner Weise ab, weshalb es per se keinerlei Sicherheit gegenüber einer Falschprogrammierung bietet.

Durch Einfügen von weiteren Schritten in den Download-Prozeß kann z. B. ein Bediener an Hand des Typenschilds des Steuergerätes oder auch das Diagnosegerät mit Hilfe von Anfragen an das Steuergerät weitere Informationen wie z.B. die Steuergeräte-Teilenummer erhalten. Anhand dieser Informationen kann ein Bediener oder das Diagnosegerät selbst prüfen, ob das Steuergerät das für die Programmierung vorgesehene ist. Hiermit kann grundsätzlich eine Eignungsprüfung durch den Bediener oder das Diagnosegerät erfolgen.

Dieses Verfahren hat jedoch zum einen den Nachteil, daß die Eignungsprüfung nicht zwangsläufig erfolgen muss. Zum anderen kann die Prüfung, z. B. an Hand der Steuergeräte-Teilenummer, nur durch einen Vergleich mit Informationen erfolgen, die nicht unmittelbarer Bestandteil des Neuprogrammierungs-Codes sind. Hierdurch ergeben sich vielfältige Fehlerquellen, z.B. durch Fehlbedienung oder durch fehlerhafte Vorgaben für das Diagnosegerät. Diese Nachteile beeinträchtigen die Prozeßsicherheit bezüglich einer Falschprogrammierung, insbesondere bei einem breiten Einsatz in KFZ-Werkstätten.

Der Erfindung liegt also die Aufgabe zugrunde, ein sicheres Verfahren zur Re-Programmierung von einem, in einem elektronischen Steuergerät vorgesehenen, elektronisch lösch- und beschreibbaren Speicher anzugeben.

Diese Aufgabe wird durch die im Patentanspruch 1 angegebene Erfindung gelöst; Weiterbildungen und vorteilhafte Ausführungsbeispiele der Erfindung sind in den Unteransprüchen angegeben.

Die Erfindung löst sich von der Funktion des Diagnosegeräts nach dem Stand der Technik, das dort als zentrale Prüfinstanz verwendet wird: Beim erfindungsgemäßen Verfahren wird zwar auch das Diagnosegerät der Kfz-Werkstatt zum Laden der Programmierdaten im Steuergerät benutzt, und es findet damit üblicherweise auch der vorstehend erläuterte Schlüsselcode-Dialog zwischen Diagnosegerät und Steuergerät statt, jedoch wird die entscheidende Prüfung auf die Zulässigkeit des Steuergerätes zum Code des Neuprogramms durch das Steuergerät selbst aufgrund der zum Steuergerät übertragenen Daten festgestellt. Die Prüfaktionen des Diagnosegeräts selbst können zusätzlich stattfinden, haben aber als solche eine geringe Bedeutung, da das Diagnosegerät bei der Erfindung lediglich zur Datenübertragung benutzt wird.

Das erfindungsgemäße Verfahren hat den Vorteil, daß alle sicherheitsrelevanten Prüfungen vom Programm des Steuergeräts selbst durchgeführt werden, so daß Fehler praktisch ausgeschlossen werden.

Die Erfindung hat weiter den Vorteil, daß sie im Feld von dem in KFZ-Werkstätten vorhandenen Wartungspersonal durchgeführt werden kann, welches üblicherweise nicht über besondere Programmierkenntnisse verfügt.

Ein weiterer Vorteil der Erfindung besteht darin, daß eine Manipulierung von Programmierdaten sicher durch das Steuergerät erkannt wird.

Eine Weiterbildung der Erfindung hat den Vorteil, daß die Daten zur Programmierung im Feld als verschlüsselte Daten vorliegen, und daß dadurch die für den Know-How-Schutz des Steuergeräteherstellers sehr wichtige Vertraulichkeit des Objektcode bei der Distribution gewahrt ist.

Die Erfindung wird im folgenden anhand eines Ausführungsbeispiels, das in der Zeichnung dargestellt ist, näher erläutert.

Es zeigen:
- Fig. 1: Den Ablauf des Verfahrens zur sicheren Neuprogrammierung von Steuergeräten;
- Fig. 2: die beim Neuprogrammierungs-Verfahren benutzten Dateien, die Speicherabbild-Datei, die Beschreibungsdatei für das Steuergerät, welches durch eine Hardware-Nummer festgelegt ist, und die Programmierdatensatz-Datei;
- Fig. 3: die Beschreibungsdatei in erweiterten Ausführungsformen, nämlich
- Fig. 3a: eine Beschreibungsdatei mit mehreren Hardware-Nummern,
- Fig. 3b: eine Beschreibungsdatei, bei der eine Hardware-Nummer durch einen Bereich von Seriennummern eingeschränkt ist,
- Fig. 3c: eine Beschreibungsdatei, bei der eine Hardware-Nummer durch eine Software-Nummer eingeschränkt ist,
- Fig. 3d: eine Beschreibungsdatei, bei der eine Hardware-Nummer sowohl durch einen Bereich von Seriennummern als auch durch eine Software-Nummer eingeschränkt ist,
- Fig. 3e: eine Beschreibungsdatei mit mehreren Hardware-Nummern, bei der eine Hardware-Nummer durch mehrere Bereiche von Seriennummern und durch mehrere Software-Nummern eingeschränkt ist,
- Fig. 3f: eine Beschreibungsdatei mit zwei Speicherabbild-Dateien und zwei Hardware-Nummern, bei der jeweils eine Speicherabbild-Datei einer Hardware-Nummer zugeordnet ist;
- Fig. 4: ein Blockschaltbild des Steuergerätes;
- Fig. 5: ein stark vereinfachtes Blockschaltbild der Fahrzeugelektronik.

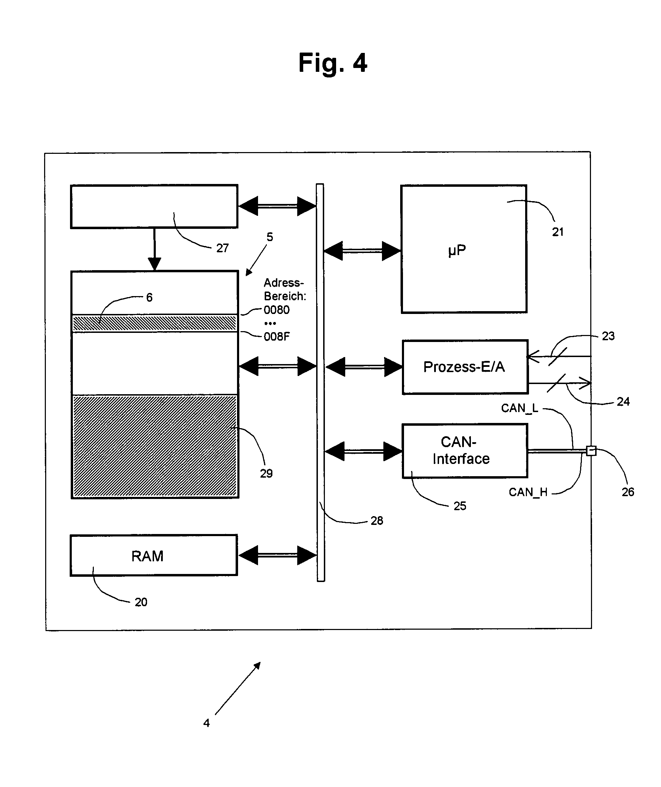

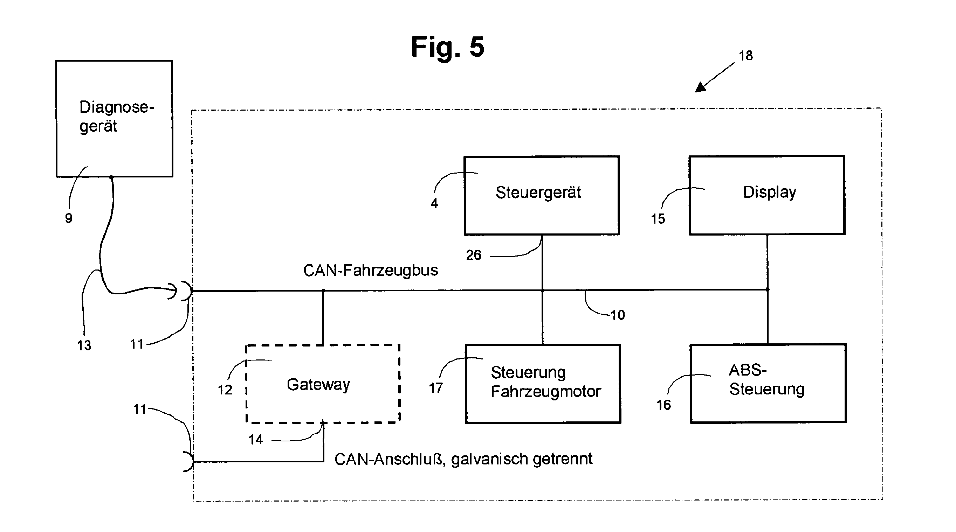

Das Blockschaltbild nach Fig. 4 zeigt ein elektronisches Steuergerät (4) mit einem z. B. als Flash-E-PROM ausgebildeten elektronisch lösch- und beschreibbaren Speicher (5), einem Random-Access Speicher (20), einem Mikroprozessor (21), einem Prozeß-Interface (22) mit Eingängen (23) für die vom Steuergerät (4) benutzten Sensoren und Ausgängen (24) zum Anschluß der vom Steuergerät (4) betriebenen Aktuatoren. Weiter sind ein CAN-Interface (25), das einen CAN-Anschlußstecker (26) für die zu verdrillenden Leitungen CAN_H und CAN_L eines CAN-Fahrzeugbusses ((10), Fig. 5) zur Verfügung stellt, und eine Flash-E-PROM Programmiereinrichtung (27) vorgesehen. Alle genannten Einheiten sind in bekannter Weise mit einem Adreß- und Datenbus (28) verbunden.

Wie üblich ist der Mikroprozessor (21) zur Steuerung der anderen Einheiten vorgesehen; das Systemprogramm für den Mikroprozessor (21) ist in einem Programmbereich (29) des Flash-E-PROM untergebracht, der im Ausführungsbeispiel den höheren Adress-Speicherbereich einnimmt. Die unten erläuterten Test- und Programmierschritte, die das Steuergerät (4) im Zusammenhang mit dem Neuprogrammierungsverfahren durchführt, werden alle durch das Systemprogramm durchgeführt, so daß der Systemprogrammbereich (29) während des Betriebes des Steuergerätes nicht verändert wird.

Unter Verwendung der Flash-E-PROM Programmier-einrichtung (27) können Speicherzellen im Flash-E-PROM (5) gelöscht und beschrieben werden, so daß das Steuergerät (4) in der Lage ist, seinen eigenen Speicher zu verändern.

Im Adressbereich des Flash-E-PROM-Speichers (5) ist ein Veränderungs-Bereich (6) mit dem Adressbereich 0080 bis 008F vorgesehen; zur Erläuterung des Verfahrens soll dieser Bereich im weiteren mit einem bestimmten Datenmuster überschrieben werden.

Der Flash-E-PROM-Speicher (5) ist beim Ausführungsbeispiel also sowohl als Programm- als auch als Datenspeicher ausgebildet; in anderen Ausführungsformen ist es natürlich auch möglich, mehrere Flash-E-PROM-Speicher vorzusehen, wobei ein Teil der Speicher als Daten- und ein anderer Teil als Programmspeicher zu verwenden ist. Das Systemprogramm kann natürlich auch in einem festen, zum Beispiel maskenprogrammierten Programm-Speicher enthalten sein. Natürlich ist es auch möglich, die erläuterten Einheiten teilweise oder ganz in einem einzigen Chip zu integrieren, so daß Teile der elektrischen Logik oder die gesamte elektronische Logik des Steuergerätes (4) in diesem Chip enthalten ist.

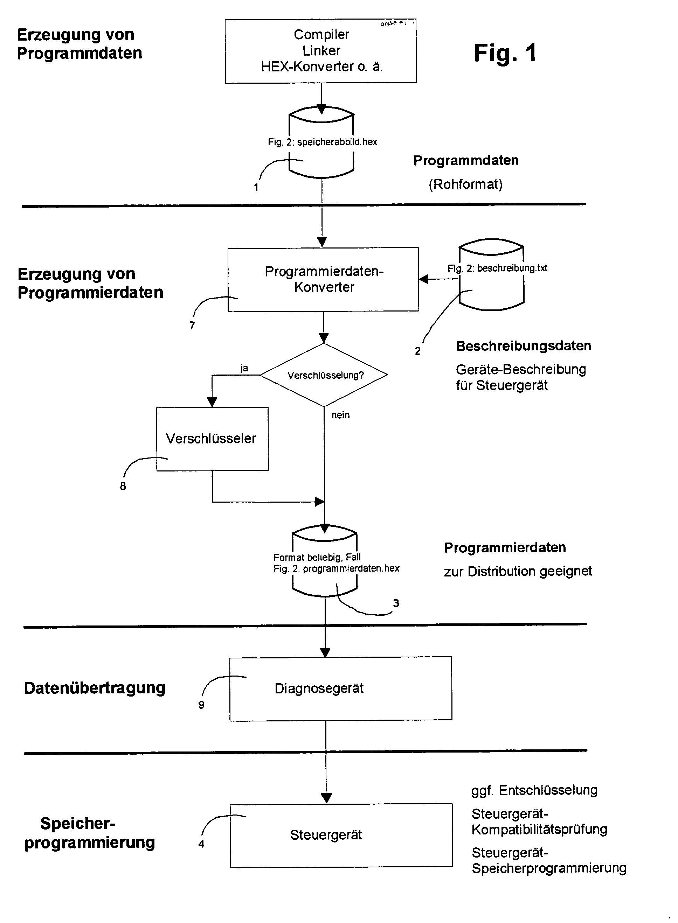

Das Programmierverfahren für mindestens einen Bereich, nämlich den Veränderungsbereich (6) in dem Flash-E-PROM-Speicher (5) gliedert sich in sieben Schritte; vergleiche hierzu Fig. 1.

In einem ersten Schritt wird ein Speicherabbild (1) für den Veränderungsbereich (6) im Flash-E-PROM-Speicher (5) erzeugt. Hierzu können für diesen Zweck geeignete Programme, wie Compiler, Assembler, Linker, HEX-Converter oder ähnliche Programme benutzt werden. Für das Format der Speicherabbild-Datei kann jedes Format gewählt werden, das bei Diagnosegeräten üblich ist, zum Beispiel das Format Motorola-S-Records.

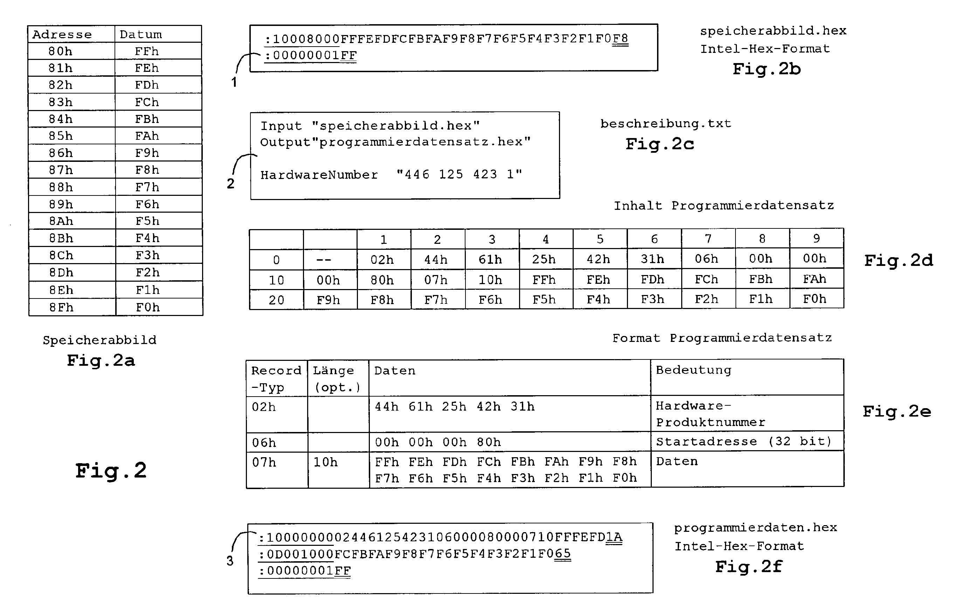

Im Ausführungsbeispiel wird für das Format der Datei "speicherabbild.hex" (1) nach Fig. 2b das Intel-Hex-Format zu Grunde gelegt, welches eines der gebräuchlichen Formate von Diagnose- und Programmiergeräten darstellt. Dieser Datei liegt das als Tabelle in Fig. 2a dargestellte Speicherabbild zugrunde, bei dem in die 16 Speicherzellen der Hex-Adressen 0080 bis 008F hexadezimale Inhalte FF bis F0 eingetragen sind; dieses Testmuster ist der guten Übersichtlichkeit halber für das Ausführungsbeispiel gewählt.

Die Datei "speicherabbild.hex" (1) besteht aus zwei Records, einem ersten Daten-Record mit einem Load-Offset (dieser bestimmt die Startadresse) von 0080h und einem zweiten End of File-Record. Beim Intel-Hex-Format dienen die mit der Record-Marke ":" beginnenden ersten fünf Byte eines Records, die in Fig. 2b einfach unterstrichen sind, zur Kennzeichnung des Records und stellen den Record-Header dar; als letztes Byte eines Records wird eine Checksumme ausgegeben, diese ist in Fig. 2b doppelt unterstrichen.

Mit dieser Unterstreichungs-Kennzeichnung in Fig. 2b ist sehr einfach nachzuvollziehen, daß die Daten im ersten Record von "speicherabbild.hex" (1) die 16 Datenbyte FFh bis F0h in der in Fig. 2a gezeigten Adressreihenfolge darstellen.

Entsprechend Fig. 1 werden für den weiteren Ablauf Beschreibungsdaten benötigt, und diese werden in einem zweiten Schritt erzeugt. Ein Beschreibungsdatensatz enthält eine Gerätebeschreibung der elektronischen Steuergeräte, die für die Programmierung zugelassen sind. Im Ausführungsbeispiel Fig. 2c ist der Beschreibungsdatensatz als Textfile "beschreibung.txt" (2) aufgebaut; er enthält eine Hardware-Produktnummer, die einen ganz bestimmten Gerätestand eines elektronischen Steuergerätes beschreibt; sie wird im folgenden vereinfachend als Hardware-Nummer bezeichnet. In einem Beschreibungsdatensatz ist mindestens eine Hardware-Nummer eingetragen, so wie dies im Ausführungsbeispiel nach Fig. 2c gezeigt ist.

Unter dem Begriff "Hardware-Nummer" wird jede eindeutige Kennung eines bestimmten Gerätezustandes verstanden, die zum Beispiel, wie im Ausführungsbeispiel, durch eine numerische Zeichenfolge bestimmt ist. Alternativ kann beispielsweise eine alphanumerische Ziffernfolge oder eine graphische Bezeichnung, zum Beispiel in Form eines Barcodes, gewählt werden. Bei einer graphischen Bezeichnung ist statt des Text-Formates, wie im Ausführungsbeispiel, ein entsprechend anderer Dateityp zu wählen. Das im Ausführungsspiel nach Fig. 2c gewählte Text-Format ist durch seine Einfachheit und Klarheit vorteilhaft, da sich sein Inhalt ohne jede weitere Erläuterung aus dem Text erschließt, der außerdem sehr deutlich mit Klartext kommentiert werden kann. Der Datenfile "beschreibung.txt" (2) nach Fig. 2c enthält für die weitere Verarbeitung den Namen der Input-Datei, mit der der File zu verarbeiten ist, nämlich die Datei "speicherabbild.hex" (1) nach Fig. 2b, und, wie unten erläutert, den Namen der Output-Datei, die das Ergebnis der Verarbeitung darstellt.

Entsprechend Fig. 1 wird unter Verwendung eines Programmierdaten-Konverters (7) aus dem Speicher-abbild, der Datei "speicherabbild.hex" (1) und dem Beschreibungsdatensatz, der Datei "beschreibung.txt" (2) ein Programmierdatensatz in Form der Datei "programmierdaten.hex (3) erzeugt, was in einem dritten Schritt erfolgt.

Die Datei "programmierdaten.hex" (3) ist in Fig. 2f dargestellt, wobei der Daten-Inhalt in Fig. 2d und das Datei-Format in Fig. 2e erläutert sind.

Für die Datei (3) des Programmierdatensatzes nach Fig. 2f ist wiederum das Intel-Hex-Format gewählt; in dieses "Mutter-Format" sind die Daten nach Fig. 2d in einer Record-Struktur im Format nach Fig. 2e als "Tochter-Format" eingebettet. Die Datei (3) des Programmierdatensatzes enthält sowohl die zur Programmierung erforderliche Information aus der Datei (1) des Speicherabbilds als auch die Geräte-Beschreibung aus der Datei (2) des Beschreibungsdatensatzes.

Entsprechend den Formaterläuterungen unter Fig. 2e wird ein erster Record vom Typ 02h erzeugt, der auf der Annahme einer zehnstelligen Hardware-Nummer basiert, so daß sich die Angabe einer Record-Länge erübrigt. Beim Inhalt des Programmierdatensatzes nach Fig. 2d ist daher das erste Byte der Record-Typ "02h" und die Bytes zwei bis sechs stellen eine direkte Umsetzung der zehnstelligen Hardware-Nummer in der Datei (2) des Beschreibungsdatensatzes dar. Es folgt dann ein Record vom Typ "06h" mit der Startadresse in 32-Bit-Form; durch die feste Länge von 4 Bytes kann auch bei diesem Record-Typ auf die Angabe einer Länge verzichtet werden. Die Bytes Nummer 7 bis 11 in Fig. 2d stellen also den Startadressen-Record dar. Nach Fig. 2e folgt dann ein Daten-Record vom Typ "07h", für den als Länge natürlich die Größe des Daten-Records als "10h" angegeben ist, gefolgt von den 16 Datenbytes des erläuterten Speicherabbild-Testmusters. Dieser Record stellt im Inhalt nach Fig. 2d die Bytes 12 bis 29 dar.

In der Datei (3) des Programmierdatensatzes sind zwei Daten-Records und ein End of File-Record vorhanden, die Record-Header sind wiederum einfach und die End of File-Records doppelt unterstrichen. Die nicht unterstrichenen Teile stellen also die übertragenen Daten dar und diese sind, wie direkt aus den ersten beiden Records der Datei (3) des Programmierdatensatzes erkennbar, die Datenbytes Nummer 1 bis Nummer 29 des Programmierdatensatz-Inhalts nach Fig. 2d. Da in der Datei (3) des Programmierdatensatzes die Startadresse in Form eines Daten-Records gespeichert ist, erübrigt sich die Angabe dieser Adresse im Record-Header der ersten beiden Records; im ersten Record ist eine Record-Länge von 10h festgelegt und daher sind dort auch die Bytes Nummer 1 bis 16 nach Fig. 2d als Daten enthalten, dagegen werden im zweiten Record die restlichen Bytes Nummer 13 bis 29 nach Fig. 2d übertragen, was einer Record-Länge von 0Dh (dezimal 13) entspricht. Der Load-Offset im Header des zweiten Records ist entsprechend der Datenlänge des ersten Records auf 10h (dezimal 16) festgelegt.

Wie in Fig. 1 gezeigt, kann der Programmierdatensatz, wenn dies gewünscht ist, während seiner Erzeugung durch ein Verschlüsselungsprogramm (8) verschlüsselt werden, was den Vorteil hat, daß die Datei (3) des Programmierdatensatzes bei seiner unten erläuterten Weiterleitung nur in verschlüsselter Form übergeben wird und das im Objekt-Code des Programms enthaltene Know-how des Steuergeräteherstellers damit nicht veröffentlicht wird.

Es ist auch möglich, den Inhalt des Programmierdatensatzes zu komprimieren, und gegebenenfalls anschließend zu verschlüsseln.

Die erläuterten ersten bis vierten Schritte finden üblicherweise beim Steuergerätehersteller statt, sie stellen einzelne Arbeitsfortschritte bei einer geplanten Neuprogrammierung eines Gerätes dar, und eine zeitliche Koordination dieser einzelnen Schritte ist aus grundsätzlicher Sicht nicht erforderlich.

Nach Fig. 1 wird die zur Distribution geeignete Datei (3) des Programmierdatensatzes, die z. B. per E-Mail oder auf dem Postweg verschickt wird, in einem fünften Schritt in ein Diagnosegerät (9) eingelesen. Dieses Diagnosegerät (9) kann in der Fertigungslinie des Fahrzeugherstellers stehen, in der das Steuergerät (4) in ein entsprechendes Fahrzeug ((18) nach Fig. 5) eingebaut wird, was jedoch ein relativ untypischer Fall ist, da Neugeräte meist in fertig programmierter Form vom Steuergerätehersteller an den Fahrzeughersteller ausgeliefert werden. Typischerweise steht dieses Programmgerät in der Werkstatt eines Fahrzeugherstellers (bzw. einer freien Werkstatt) und dient in der bereits vorstehend erläuterten Art und Weise zur Neuprogrammierung eines Steuergerätes (4).

In einem fünften Schritt wird der Programmierdatensatz (3) unter Nutzung von Datenübertragungsmitteln, die zwischen dem Diagnosegerät (9) und dem Steuergerät (4) bestehen, in dieses übertragen. Grundsätzlich kann dabei der Programmierdatensatz im Intel-Hex-Format übertragen werden. Typischerweise jedoch interpretiert das Diagnosegerät bereits das Intel-Hex-Format des Programmierdatensatzes und überträgt dann den Inhalt des Programmierdatensatzes in einer vom Diagnoseprotokoll vorgegebenen Weise an das Steuergerät.

Die Übertragung erfolgt besonders vorteilhaft, wenn das Steuergerät (4) weder ausgebaut werden muß, noch wenn an ihm irgendwelche Manipulationen vorgenommen werden müssen. Dies ist der Fall, wenn das Anschlußkabel (13) des Diagnosegerätes (9) lediglich an den Diagnosestecker (11) des Fahrzeugs (18) angeschlossen werden muß und die Datenübertragungsmittel einen direkten Transfer zum Steuergerät ermöglichen, wie dies unten im Zusammenhang mit Fig. 5 erläutert ist.

Es sei ergänzt, daß statt eines Diagnosegerätes (9) grundsätzlich auch irgend ein elektronisches Gerät zur Realisierung des fünften Schrittes, der Übertragung des Programmierdatensatzes (3) in das Steuergerät (4) verwendet werden kann, welches lediglich in der Lage sein muß, das (möglicherweise ausgebaute) Steuergerät (4) über eine beliebig ausgebildete Schnittstelle (4) elektrisch zu kontaktieren und die Übertragung unter Verwendung eines beliebig ausgebildeten Protokolls abzuwickeln. Der Begriff "Diagnosegerät" umfasst in seiner im Sinne der Erfindung erweiterten Bedeutung also auch alle derartigen Daten-Übertragungsgeräte.

In einem sechsten Schritt prüft das Steuergerät (4) unter Nutzung seines Systemprogramms im Bereich (29) des Flash-E-PROM-Speichers (5), ob es zum Bereich der durch die Datei (3) des übertragenen Programmierdatensatzes zugelassenen Steuergeräte gehört, und diese Überprüfung wird anhand der Gerätebeschreibung im Programmierdatensatz durchgeführt. Wenn bei der Programmierdaten-Erstellung eine Verschlüsselung vorgenommen worden ist, dann müssen die verschlüsselten Daten vor ihrer Überprüfung vom Steuergerät natürlich zuerst entschlüsselt werden; gleiches gilt auch für eine möglicherweise durchgeführte Datenkomprimierung vor der Datenübertragung.

Ist das elektronische Steuergerät (4) im sechsten Schritt zur Feststellung gelangt, daß es zum Bereich der zugelassenen Geräte gehört, so wird in einem siebten und letzten Schritt der Veränderungsbereich (6) im Flash-E-PROM-Speicher (5) vom Steuergerät selbst in der durch die Datei (3) des Programmierdatensatzes bestimmten Weise programmiert; hierzu wird, wie bereits erwähnt, die oben erläuterte, im Steuergerät (4) enthaltene Flash-E-PROM-Programmiereinrichtung (27) benutzt.

Im Gegensatz zu den Schritten erstens bis drittens, die wie erläutert, zeitlich nicht notwendigerweise zusammengehören, werden die nachfolgenden vierten bis siebten Schritte als zusammengehöriger Vorgang entweder beim Fahrzeughersteller, oder in wie erläutert besonders vorteilhafter Weise in der Werkstatt, durchgeführt.

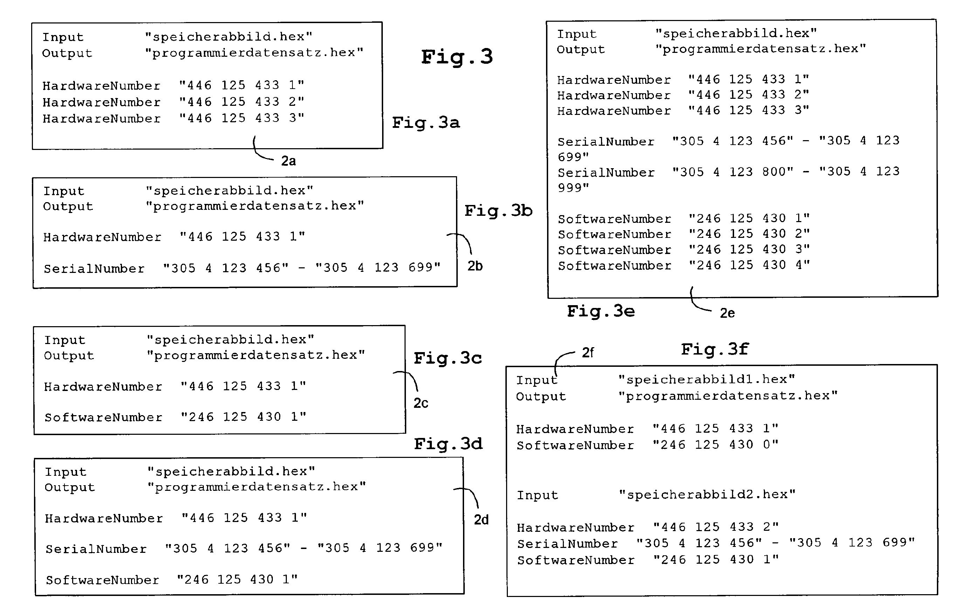

Die einzelnen Darstellungen von Fig. 3 zeigen Dateien der Beschreibungsdaten mit erweiterter Geräte-Beschreibung für die zugelassenen Steuergeräte:
In der Beschreibungsdaten-Datei (2a) nach Fig. 3a sind drei unterschiedliche Hardware-Nummern spezifiziert, was bedeutet, daß alle (logisches ODER) Steuergeräte (4) mit dem Gerätestand nach diesen Hardware-Nummern zur Programmierung zugelassen sind.
In der Beschreibungsdaten-Datei (2b) nach Fig. 3b wird eine Hardware-Nummer von einem Bereich von Seriennummern gefolgt; dies bedeutet, daß der durch die Hardware-Nummer beschriebene Gerätestand durch diesen Bereich von Seriennummern eingeschränkt ist (logisches UND); es sei ergänzt, daß statt eines Bereiches von Seriennummern auch nur eine einzige Seriennummer angegeben werden kann.
In der Beschreibungsdaten-Datei (2c) nach Fig. 3c folgt auf die Hardware-Nummer eine Software-Nummer, die einen bestimmten Softwarestand des durch die Hardware-Nummer festgelegten Gerätestandes eines Steuergerätes (4) bestimmt; dies bedeutet, daß der durch die Hardware-Nummer beschriebene Gerätestand durch den durch die Software-Nummer beschriebenen Softwarestand eingeschränkt ist (logisches UND). Es können auch mehrere Software-Nummern angegeben werden, so daß sich die Einschränkung auf die Auswahl der angegebenen Software-Nummern bezieht (logisches ODER).
In der Beschreibungsdaten-Datei (2d) nach Fig. 3d folgt der Hardware-Nummer sowohl ein Bereich von Seriennummern als auch eine Software-Nummer; dies bedeutet, daß der durch die Hardware-Nummer beschriebene Gerätestand eines Steuergerätes (4) sowohl durch eine oder einen Bereich von Seriennummern (logisches UND), als auch durch eine (oder im Falle von mehreren durch mehrere) Software-Nummern eingeschränkt ist (logisches UND).
Bei der Beschreibungsdaten-Datei (2e) nach Fig. 3e sind drei Hardware-Nummern eingegeben, und die letzte Hardware-Nummer wird sowohl durch zwei Bereiche von Seriennummern als auch durch die Softwarestände von vier Software-Nummern eingeschränkt.
Unter Fig. 3f ist eine Beschreibungsdaten-Datei (2f) gezeigt, bei der zwei Speicherabbild-Dateien und zwei (durch Software-Nummern und/oder Seriennummern jeweils weiter eingeschränkte Hardware-Nummern) spezifiziert sind; bei der Ausführung des auf diesem Beschreibungsansatz beruhenden Programmierdatensatzes wird das eine Speicherabbild nur in Geräte mit der zugehörenden einen Hardware-Nummer und das andere Speicherabbild nur in Geräte mit der anderen Hardware-Nummer aufgenommen. Auf diese Weise lassen sich also mit einem Programmierdatensatz unterschiedliche Geräte unterschiedlich programmieren.

Erwähnt sei, daß die Beschreibungsdaten weitere Geräte-, Bauelemente- oder Software-spezifische Kennungen enthalten können, die eine weitere Verfeinerung der Einschränkungen ermöglichen. Beispielsweise kann auch eine Identifikation des Mikroprozessors den Beschreibungsdaten hinzugefügt werden.

Wie erläutert, ist eine Beschreibungsdaten-Datei (2x) nach Fig. 2 bzw. Fig. 3a bis Fig. 3f als Textfile mit einzelnen Textzeilen ausgebildet. Wie vorstehend bereits sinngemäß gezeigt, gibt es eine Reihe ganz bestimmter Wörter, die jeweils als OP-Key, d. h. als Kennwort für eine bestimmte Operation, wirksam sind. Der zu einer derartigen Operation gehörende Operand ist im nachfolgenden Text in zwei Anführungszeichen eingebettet. Der gesamte andere Text ist frei wählbar, so daß auch eine ausführliche Klartext-Kommentierung innerhalb des Textfiles möglich ist.

Wie erläutert, erzeugt der Programmierdaten-Konverter (7) aus der Datei (2) des Beschreibungsdatensatzes und der Datei (1) des Speicherabbilds die Datei (3) des Programmierdatensatzes und fügt bei diesem Datenverarbeitungsvorgang die im Beschreibungsdatensatz enthaltenen Operationen als dem "Mutter-Format" unterlagerten Satz von "Tochter-Records" ein, wobei für jede Operation ein bestimmter Record-Typ festgelegt ist. Die Zuordnung eines vorstehend erwähnten Record-Typs (es können noch weitere Record-Typen festgelegt werden) im Programmierdatensatz zum OP-Key des Beschreibungsdatensatzes ergibt sich aus folgender Tabelle:

| **OP-Key** | **Record-Typ** |
|---|---|
| Input | --- |
| Output | --- |
| HardwareNumber | 02 |
| SerialNumber | 03 |
| SoftwareNumber | 04 |

Es sei darauf hingewiesen, daß das Zusammenfügen einer das Speicherabbild beschreibenden Datei und einer Datei mit der Geräte-Beschreibung zur Datei eines Programmierdatensatzes auch praktisch in anderer Weise ausgeführt werden kann; um die Erfindung zu realisieren, ist es lediglich erforderlich, daß der Programmierdatensatz neben dem Speicherabbild auch die Geräte-Beschreibung in hinreichender Weise umfaßt, damit im Steuergerät die Kompatibilitätsprüfung in eindeutiger Weise ausgeführt werden kann.

In Fig. 5 sind Datenübertragungsmittel zur Übertragung der Datei (3) des Programmierdatensatzes in das elektronische Steuergerät (4) dargestellt. Neben dem elektronischen Steuergerät (4) sei beispielsweise im Fahrzeug ein ABS-Steuergerät (16) und ein Steuergerät für eine Fahrzeugmotor-Steuerung (17) vorgesehen. Nach dem Stand der Technik sind diese Geräte über einen CAN-Fahrzeugbus (10) miteinander verbunden, an den z. B. auch das Dashboard-Display (15) in der Fahrerkabine angeschlossen ist.

Über dieses Dashboard-Display (15) können gegebenenfalls Diagnosedaten über den erfolgreichen bzw. nicht erfolgreichen Verlauf der Flash-E-PROM-Programmierung im Steuergerät (4) durch das Steuergerät selbst angezeigt werden.

Zur Verbindung des Diagnosegerätes (9) mit der im Straßenfahrzeug vorgesehenen Elektronik (18) ist an dieser ein 16-poliger Diagnosestecker (11) nach ISO/DIS 15031-3 vorgesehen, an den auch die verdrillten Leitungen CAN_H und CAN_L des CAN-Fahrzeugbusses (10) angeschlossen sind (am Diagnosestecker (11) sind für CAN_H Kontakt Nr. 6 und für CAN_L Kontakt Nr. 14 vorgesehen).

Das Diagnosegerät (9) wird zunächst durch Einstecken des Anschlußkabels (13) in den Diagnosestecker (11) an das Fahrzeug (18) angeschlossen.

Erwähnt sei, daß z. B. auch die K-Leitung zur Datenübertragung benutzt werden kann, natürlich vorausgesetzt, die K-Leitung ist überhaupt installiert (am Diagnosestecker (11) ist für die K-Leitung der Kontakt Nr. 7 reserviert).

Bei dem oben erläuterten Anschluß über "CAN" ist nachteilig, daß der CAN-Fahrzeugbus ungepuffert, d. h. ohne Potentialtrennung, am Diagnosestecker anliegt. Zur Realisierung eines potentialfreien CAN-Anschlusses besteht die Möglichkeit - in Fig. 5 gestrichelt gezeichnet - ein CAN-Gateway (12) vorzusehen, welches zur Verbindung mit dem Diagnosegerät (9) über seinen galvanisch getrennten CAN-Anschluß (14) ebenfalls an einem Diagnosestecker (11) angeschlossen ist. Bei dieser Lösung muß jedoch das CAN-Gateway (12) als zusätzliches Modul im Fahrzeug (18) installiert sein, was zu höheren Grundkosten führt.

Zur Vermeidung dieser Kosten kann die Übertragung zwischen Diagnosegerät (9) und dem Steuergerät (4) im Fahrzeug (18) auch per Funk geschehen; hierzu wird am Diagnosestecker (11) ein Funkmodul aufgesteckt und dieses wird per Funk vom Diagnosegerät (9) aus angesteuert; dieser Übertragungsweg ist natürlich per se potentialgetrennt.

Unter Nutzung einer derartigen Funkverbindung rückt sogar die Realisierung der Vision näher, in nicht allzu ferner Zukunft die im Feld befindlichen elektronischen Steuergeräte (4) automatisch "on-line" nachzuprogrammieren, ohne daß hierzu eine Werkstatt überhaupt aufgesucht werden muß; hierzu wird das Funkmodul fest im Fahrzeug (18) installiert und wird per Funk direkt vom Diagnosegerät (9) in der Werkstatt zur Durchführung des Programmierdialogs angesteuert. Mit den erläuterten Mitteln ermöglicht die Erfindung schon heute die Auswahl eines bestimmten Gerätetyps oder auch die selektive Auswahl eines einzelnen Steuergerätes.

## Patentansprüche

1. Programmierverfahren für mindestens einen Bereich (6) in mindestens einem elektronisch lösch- und beschreibbaren Speicher (5), welcher als Programmspeicher, als Datenspeicher oder als Programm- und Datenspeicher für mindestens einen Mikroprozessor (21) in einem elektronischen Steuergerät (4) vorgesehen ist, vorzugsweise zum Einsatz für eine in der Elektronik (18) eines Straßenfahrzeugs angeordnete elektronische Steuerung oder Regelung, mit folgenden Merkmalen:
a) In einem ersten Schritt wird mindestens ein Speicherabbild (1) für den mindestens einen elektronisch lösch- und beschreibbaren Speicher (5) in einem dort festgelegten Speicherbereich erzeugt;
b) in einem zweiten Schritt wird ein Beschreibungsdatensatz (2) erzeugt, welcher eine Geräte-Beschreibung der für die Programmierung zugelassenen elektronischen Steuergeräte enthält, welche mindestens die Hardware-Nummer des Gerätestandes mindestens eines elektronischen Steuergerätes umfasst;
c) in einem dritten Schritt wird aus dem mindestens einen Speicherabbild (1) und dem Beschreibungsdatensatz (2) ein Programmierdatensatz (3) erzeugt, welcher die Geräte-Beschreibung enthält;
d) in einem vierten Schritt wird der Programmierdatensatz (3) in ein Diagnosegerät (9) eingelesen;
e) in einem fünften Schritt wird der Programmierdatensatz (3) vom Diagnosegerät (9) unter Nutzung von Datenübertragungsmitteln (13, 11, 10, 26) in das Steuergerät übertragen;
f) in einem sechsten Schritt wird vom Steuergerät (4) geprüft, ob das elektronische Steuergerät (4) zum Bereich der für den übertragenen Programmierdatensatz (3) zugelassenen Steuergeräte gehört, was durch die Geräte-Beschreibung (2) festgelegt ist;
g) gehört das elektronische Steuergerät (4) zum Bereich der zugelassenen Steuergeräte, so wird in einem siebten Schritt der mindestens eine Bereich (6) in dem mindestens einen elektronisch lösch- und beschreibbare Speicher (5) des Steuergerätes (4) vom Steuergerät (4) selbst in der durch den Programmierdatensatz (3) bestimmten Weise programmiert.

2. Programmierverfahren nach Anspruch 1, **dadurch gekennzeichnet, daß** die Schritte a) bis d) als zeitlich nicht notwendigerweise zusammengehöriger Vorgang beim Steuergerätehersteller, und nachfolgend die Schritte e) bis g) als zeitlich zusammengehöriger Vorgang entweder beim Fahrzeughersteller oder in der Werkstatt durchgeführt werden.

3. Programmierverfahren nach Anspruch 1 oder 2, **dadurch gekennzeichnet, daß** der Programmierdatensatz (3) im fünften Schritt e) sequentiell als Folge von Datensegmenten in das Steuergerät (4) übertragen wird.

4. Programmierverfahren nach mindestens einem der Ansprüche 1 bis 3, **dadurch gekennzeichnet, daß** die Geräte-Beschreibung (2a) der für die Programmierung zugelassenen elektronischen Steuergeräte mehrere Hardware-Nummern der Gerätestände eines oder mehrerer elektronischer Steuergeräte umfasst.

5. Programmierverfahren nach Anspruch 1 oder 4, **dadurch gekennzeichnet, daß** der durch die Hardware-Nummer beschriebene Gerätestand eines Steuergerätes durch eine Seriennummer oder durch einen Bereich von Seriennummern (2b) eingeschränkt ist.

6. Programmierverfahren nach Anspruch 1 oder 4, **dadurch gekennzeichnet, daß** der durch die Hardware-Nummer beschriebene Gerätestand eines Steuergerätes durch eine Software-Nummer (2c) oder durch einen Bereich von Software-Nummern (2e) eingeschränkt ist, welche den Softwarestand beschreiben.

7. Programmierverfahren nach Anspruch 1 oder 4, **dadurch gekennzeichnet, daß** der durch die Hardware-Nummer beschriebene Gerätestand eines Steuergerätes sowohl durch eine Seriennummer oder einen Bereich von Seriennummern, als auch durch eine Software-Nummer oder einen Bereich von Software-Nummern (2e) eingeschränkt ist.

8. Programmierverfahren nach mindestens einem der vorstehenden Ansprüche, **dadurch gekennzeichnet, daß** der im dritten Schritt c) erzeugte Programmierdatensatz (3) während seiner Erzeugung verschlüsselt, und vom Steuergerät im fünften Schritt e) wieder entschlüsselt wird.

9. Programmierverfahren nach mindestens einem der vorstehenden Ansprüche, **dadurch gekennzeichnet, daß** der im dritten Schritt c) erzeugte Programmierdatensatz (3) während seiner Erzeugung komprimiert, und vom Steuergerät (4) im fünften Schritt e) wieder de-komprimiert wird.

10. Programmierverfahren nach mindestens einem der vorstehenden Ansprüche, **dadurch gekennzeichnet, daß** der im dritten Schritt c) erzeugte Programmierdatensatz (3) durch mindestens eine Checksumme abgesichert wird, die vom Steuergerät überprüft wird.

11. Programmierverfahren nach mindestens einem der vorstehenden Ansprüche, **dadurch gekennzeichnet, daß** als Datenübertragungsmittel zur Übertragung des Programmierdatensatzes (3) vom Diagnosegerät (9) in das Steuergerät (4) Funkmittel benutzt werden.

12. Programmierverfahren nach Anspruch 11, **dadurch gekennzeichnet, daß** das Programmierverfahren automatisch "on-line" für ein im Feld befindliches Steuergerät (4) durchgeführt wird, ohne daß hierzu eine Werkstatt aufgesucht wird.
